# EUROPÄISCHE PATENTSCHRIFT

(11) **EP 1 509 394 B1**
(45) Veröffentlichungstag und Bekanntmachung des Hinweises auf die Patenterteilung: **30.08.2006**
(21) Anmeldenummer: 03755961.4
(22) Anmeldetag: 30.05.2003
(51) Int. Cl.: B32B 27/12, B32B 37/00, B60R 21/16, D06N 3/00

(54) **GASSACK UND VERFAHREN ZUM HERSTELLEN EINES GASSACKS**
AIRBAG AND METHOD FOR PRODUCING AN AIRBAG
AIRBAG ET PROCEDE DE PRODUCTION D'UN AIRBAG

(30) Priorität: 04.06.2002 DE 10224771
(43) Veröffentlichungstag der Anmeldung: 02.03.2005
(73) Patentinhaber: BST Safety Textiles GmbH, 79689 Maulburg (DE)
(72) Erfinder: BERGER, Johann, 73553 Alfdorf (DE); SAINT-DENIS, Holger, 79618 Rheinfelden (DE); HUBER, Norbert, 79713 Bad Säckingen (DE); RUSCHULTE, Jörg, 79736 Rickenbach-Altenschwand (DE)
(74) Vertreter: Fischer, Matthias
(86) Internationale Anmeldenummer: PCT/EP2003/005697
(87) Internationale Veröffentlichungsnummer: WO 2003/101731

(56) Entgegenhaltungen:
- EP-A- 1 044 803
- WO-A-01/68408
- WO-A-02/28689
- US-A- 5 296 278
- US-B1- 6 177 366
- US-B1- 6 294 487
- DATABASE WPI Section Ch, Week 199108 Derwent Publications Ltd., London, GB; Class A28, AN 1991-055602 XP002256160 & JP 03 007337 A (TOMOEGAWA PAPER MFG CO LTD), 14. Januar 1991 (1991-01-14)
- DATABASE WPI Section Ch, Week 199503 Derwent Publications Ltd., London, GB; Class A23, AN 1995-018831 XP002256161 & JP 06 305089 A (TOMOEGAWA SEISHISHO KK), 1. November 1994 (1994-11-01)

## Beschreibung

Die vorliegende Erfindung betrifft einen Gassack mit zwei Gewebelagen aus einem textilen Flächengebilde, die zueinander gegenüberliegend angeordnet sind und die wenigstens eine Kammer umschließen, die mit Gas gefüllt werden kann, wobei die Gewebelagen nach außen zeigende Oberflächen aufweisen, sowie ein Verfahren zum Herstellen eines derartigen Gassacks.

Es sind im Einsatz befindliche Gassackgewebe bekannt, deren technische Eigenschaften maßgeblich durch die dichte Konstruktion des Gewebes bestimmt werden. Um die geforderten Festigkeiten oder Luftdichtigkeiten zu erreichen, muß das Gewebe mit einer entsprechend hohen Fadendichte gefertigt werden, was aufgrund des hohen Materialbedarfs zu einer kostspieligen Fertigung führt. Konfektionierte Airbags bzw. in einem Stück gewebte Airbags, sogenannte one-piece-woven-bags (OPW) müssen im Anwendungsfall, d.h. im Kollisionsfall die geforderte Standzeit haben, d.h. der Druck im Gassack muß über die geforderte Zeit erhalten bleiben; die müssen Airbags dicht sein. Hierfür werden derartige Airbags beispielsweise äußerst dicht gewebt, wobei auf Bindungsänderungen im Übergangsbereich von zweilagigen Abschnitten in einlagige Abschnitte größte Anstrengungen unternommen werden, um beispielsweise eine möglichst hohe Weiterreißkraft des Gewebes oder Kammausziehkraft zu erreichen.

Da in vielen Fällen das auf diese Weise hergestellte Gewebe der Airbags immer noch nicht die ausreichende Dichtigkeit des Airbags ergab, wurden in einem kostspieligen Verfahren zusätzlich dünne Folien auflaminiert, deren einzige Aufgabe darin bestand, noch vorhandene feine Poren des Gewebes so abzudichten, daß die erforderliche Dichtigkeit erreicht wurde. Derart hergestellte Airbags waren einerseits aufgrund des Webverfahrens sehr teuer herzustellen. Andererseits verteuerten sich die Airbags durch die aufwendige Beschichtung zusätzlich empfindlich.

Insbesondere die Ausrüstung des Gewebes mußte aufgrund der hohen Dichte langsam und damit kostenintensiv durchgeführt werden.

Die bekannten Airbag-Gewebe haben den weiteren Nachteil, daß sie aufgrund der hohen Fadendichte und dem damit verbunden langsameren Webprozeß im Garn entsprechend höher belastet werden. So erfolgt beispielsweise während des sogenannten Fachwechsels, d.h. während des wechselseitigen Übergehens der Fäden von der oberen in die untere Webstellung und umgekehrt bei höheren Fadendichten ein häufigeres und intensiveres Reiben der Fäden aneinander. In der Folge ist mit großen Qualitätseinbußen beim Webprozeß (Kapillarbeschädigung, aufgeschobene Flusen, Nester, Fadenbrüche und dergleichen) zu rechnen, die ein hohes Maß an Ausschuß bedeuten können. Zudem bedeuten Beschädigungen der Fäden beim Webprozeß in vielen Fällen auch einen Stillstand der Webmaschine, der, auch bedingt durch immer höhere Maschinendrehzahlen, einen sehr starken Abfall des Wirkungsgrads bedeuten kann, was in der Folge die ohnehin hohen Produktionskosten noch weiter ansteigen läßt.

Ein weiterer Nachteil der diskutierten Airbags besteht darin, daß aufgrund der hohen Fadendichte und infolge einer entsprechend hohen Gewebedicke des Airbag-Gewebes ein gewisses Packvolumen des fertigen Airbags im gefalteten Zustand nicht zu unterschreiten ist. Durch hohe Fadendichten werden Airbag-Gewebe oder Airbags steifer, was die weitere Verarbeitung des Gewebes erschwert.

Aus der EP 1 044 803 A2 ist ein textiles Gassackmaterial für ein Schutzkissen für ein Fahrzeuginsassen-Rückhaltesystem bekannt, wobei auf jeweils einer Seite zweier verwebter Wandungsabschnitte des Gassacks vollflächig eine Folie aus luftdichtem Material aufgebracht ist, um die Luftundurchlässigkeit des Gassackmaterials zu gewährleisten. Die aufgebrachte Folie (Beschichtung) bildet keine Armierung für das textile Gassackmaterial.

Die US 6,177,366 B1 offenbart eine Airbagbeschichtungsverbindung aus wenigstens zwei getrennten und einzelnen Lagen, wobei die erste Lage, eine sogenannte Basisbeschichtung, mit dem Airbag in Kontakt steht und das Adhäsionsmittel für die zweite sogenannte Deckbeschichtung (topcoat) darstellt.

Die US 5,296,278 beschreibt gasdicht gewobenes Airbaggewebe, welches kein Risiko zur Verbrennung einer Person in sich birgt aufgrund der Ausbildung der gasdurchlässigen Perforationen und der Gasströmung, wenn der Gassack aufgeblasen wird. Es wird ein gasdicht gewebter Airbag offenbart, der spezielle Eigenschaften betreffend die Garndicke, das Garnmaterial und den Draht des Garns betrifft, sowie eine nach außen zeigende geglättete Oberfläche haben kann, die durch einen Kalandriervorgang erreicht wird. Die Glättung einer Oberfläche soll dazu beitragen, dass dem Fahrzeuginsassen bei Berührung mit dem Airbag keine Abschürfungen geschehen können.

Der vorliegenden Erfindung liegt die Aufgabe zugrunde, einen kostengünstigen Gassack herzustellen, bei dem die aus dem Stand der Technik bekannten Nachteile vermieden oder wenigstens sehr stark vermindert sind, sowie ein Herstellungsverfahren für einen derartigen Gassack vorzuschlagen.

Die Aufgabe wird zunächst gelöst mit einem Gassack gemäß Anspruch 1. Der erfindungsgemäße Gassack läßt sich wesentlich kostengünstiger herstellen, als aus dem Stand der Technik bekannte Gassäcke. Durch die Anordnung von Beschichtungen auf den nach außen zeigenden Oberflächen der Gewebelagen des Gassacks, die geeignet sind, die Abdichtung und die Armierung des Gassacks zu bilden, kann das textile Flächengewebe des Gassacks vergleichsweise lose gewebt werden. Mit Armierung des Gassacks ist die Ausstattung des Gassacks mit einer Beschichtung gemeint, die insb. hohe Festigkeit, Dichtigkeit und Haftfähigkeit auf dem Gewebe aufweist. Das Gewebe selbst gibt sozusagen die äußere und innere Struktur des Gassacks und seiner wenigstens einen Kammer vor, trägt also nicht in erster Linie zur Dichtigkeit und Festigkeit des Gewebes bei, die nämlich von der Beschichtung, z. B. auch in Form einer Folie übernommen wird. Infolgedessen können die Fadendichten des Gewebes gegenüber bekannten Materialien stark redimensioniert werden. So können beispielsweise die einlagigen Bereiche in einem OPW statt bisher in einer Panama-Bindung nun in einer (einfacheren) Leinwandbindung fest und dicht ausgeführt werden. An den Übergängen von ein- zu zweilagigen Bereichen mit gleicher Bindung, nämlich der hier nun vorgeschlagenen möglichen Leinwandbindung wird die Belastung des Gewebes durch Scherkräfte an diesen kritischen Stellen stark reduziert. Damit sind die Gefahr des Sich-lösens bzw. der Beschädigung der auf dem Gewebe angeordneten Beschichtung und die dadurch entstehende Leckagebildung drastisch. Der erfindungsgemäße Gassack gewährleistet damit durch die Einhaltung der geforderten Luftdichtigkeit die vorgesehene Standzeit.

Ein weiterer Vorteil besteht darin, daß sich auf der nun möglichen bindungstechnisch glatteren Oberfläche der Leinwandbindung eine bessere Haftung der Beschichtung erreichen läßt, wodurch die Gefahr der Leckagebildung noch weiter reduziert wird. Aufgrund der niedrigeren Fadendichten und dem damit höheren Ausstoß aus der Webmaschine können die Airbag-Gewebe und OPW in der Weberei und Ausrüstung vorteilhafterweise wesentlich kostengünstiger hergestellt und verarbeitet werden. Durch die geringere Anzahl von Fachwechseln als auch durch die geringere Reibung der Fäden aneinander verringert sich außerdem die Belastung des Garnmaterials erheblich. Es ergibt sich eine deutliche Reduzierung der Fehleranzahl (Kapillarbeschädigung, aufgeschobene Flusen, Nester, Fadenbrüche und dergleichen) und damit eine immense Verbesserung der Qualität der Ware. Die damit einhergehende Verkürzung der Stillstandszeiten der Webmaschinen aufgrund von Garnbeschädigungen führt zu einer wesentlichen Steigerung des Wirkungsgrades.

Ein weiterer Vorteil des erfindungsgemäßen Gassacks ergibt sich durch sein reduziertes Packvolumen im gefalteten Zustand. Die infolge der Erfindung mögliche Reduzierung der Fadendichten ermöglicht die Senkung des Gewebeindex (cover-Faktor) und führt zu einem im Griff weicheren Gewebe mit entsprechend niedrigerer Biegesteifigkeit. Hierdurch läßt sich das vom Webstuhl kommende Gewebe in nachfolgenden Verfahrensschritten wesentlich besser verarbeiten.

Weitere Merkmale und Vorteile der Erfindung sind den Unteransprüchen zu entnehmen.

Die Aufgabe wird außerdem durch ein Verfahren gemäß Anspruch 8 gelöst. Hierzu ist insbesondere auf den Vorteil des Aufwalzens von thermoplastischen Folien unter Wärme auf die Oberflächen hinzuweisen, wodurch vorteilhafterweise die Bindungspunkte im Gewebe durch Druck abgeflacht werden und somit eine größere Auflagefläche für die aufgewalzten Folien bieten. Es läßt sich also durch einen vergleichsweise einfachen Kniff eine glattere Oberfläche und eine damit verbesserte Verbindung von Beschichtung und Gewebe erreichen.

Die Oberflächen von z.B. gewebten, gewirkten oder geflochtenen textilen Flächengebilden, wie sie die o.g. Oberflächen beispielsweise darstellen, haben in der Regel keine glatte sondern eine "hügelige" Struktur, so daß sie für eine Beschichtung z.B. in Form einer Folie keine zusammenhängende ebene Angriffsfläche bieten. Die Fäden des textilen Flächengebildes kommen nur zum Teil an die Oberfläche des textilen Flächengebildes und verschwinden dann wieder darin. Die "hügelige" Struktur hat Berge und Täler, bei einem Gestrick beispielsweise die Anordnung von hohen, an der Oberfläche liegenden Maschenköpfen und tiefer im Gestrick liegenden Maschenfüßen.

Es ist bekannt, textile Flächengebilde mit Flüssigkeiten, Folien, filmartigen Materialien oder sog. Laminaten und dergl. zu beschichten. Dies dient z.B. zur Erhöhung der Alterungsbeständigkeit und/oder der Abdichtung und/oder zur Verringerung der Permeabilität und/oder der Reibung etc. Werden derartige textile Flächengebilde mechanisch, hydraulisch oder pneumatisch strapaziert, ist es möglich, daß sich die Verbindung zwischen dem textilen Flächengebilde und der Beschichtung löst, was ggfs. zum Totalausfall der Funktion des textilen Flächengebildes führen kann.

In einer vorteilhaften Weiterbildung des erfindungsgemäßen Verfahrens läßt sich gemäß Anspruch 9 ein kostengünstiges Verfahren zum Beschichten von textilen Flächengebilden, insbesondere Geweben, insbesondere Airbaggeweben, insbesondere Airbags erreichen, mit dem sich eine verbesserte Haftung zwischen textilen Flächengebilden und ihren Beschichtungen ergibt. Sowohl durch eine Corona-Behandlung als auch durch eine Plasmabehandlung als auch durch Fluorieren wird die Haftfähigkeit des textilen Flächengebildes wesentlich verbessert. Beim Corona- und Plasmaverfahren, das z. B. im deutschen Gebrauchsmuster DE 298 05 999 U1 beschrieben und diskutiert wird, werden elektrostatische Anziehungskräfte aktiviert, die die Haftung von auf textile Flächengebilde aufgebrachten Substanzen sehr stark erhöhen. Beim Fluorieren eines textilen Flächengebildes findet an der Oberfläche eine reproduzierbare, trockenchemisceh Reaktion statt, bei der Wasserstoffatome durch Fluoratome substituiert werden. Dadurch wird eine über längere Zeit aktive Oberfläche geschaffen, an der mechanische und chemische Bindungen möglich sind.

In einer anderen vorteilhaften Weiterbildung des erfindungsgemäßen Verfahrens werden die textilen Flächengebilde mit einer Silikonschicht beschichtet, deren vom textilen Flächengebilde wegzeigende Oberfläche mit Fluorgas behandelt wird. Durch diese Flourierung wird eine weitestgehend glatte Oberfläche erzielt, was die Haftung Silikon/Silikon nahezu aufhebt.

Dieser Vorteil läßt sich insbesondere für zu faltende Airbags nutzen, da nun ein bisher notwendiges und übliches Trennmittel entfallen kann.

Die Erfindung wird im folgenden anhand eines Ausführungsbeispiels kurz erläutert.

Fig. 1 zeigt schematisch im Querschnitt eine Gewebelage eines erfindungsgemäßen Gassacks.

Fig. 2 zeigt in schematischer Weise den Aufwalzvorgang von thermoplastischen Folien auf eine Gewebelage zur Herstellung eines textilen Flächengebildes für den erfindungsgemäßen Gassack.

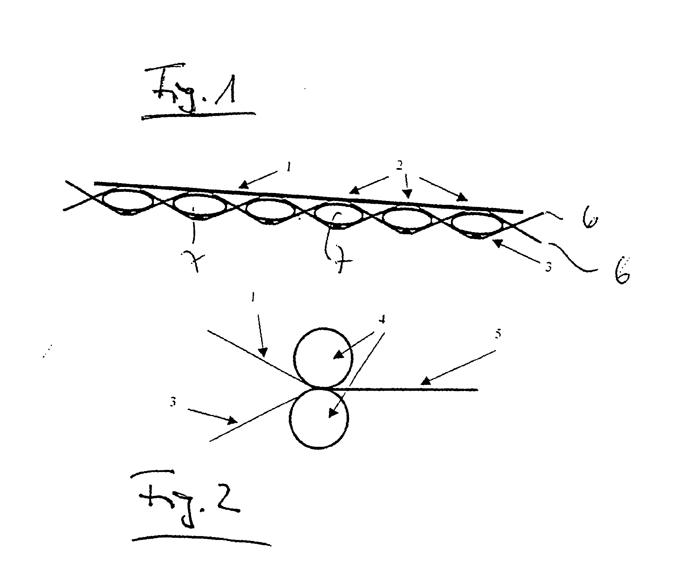

Fig. 1 zeigt ein Gewebe mit Schußfäden 6 und (nicht maßstabsgetreu dargestellten) Kettfäden 7. Es sind sog. Verbindungspunkte 2 zu erkennen, an denen eine bezüglich Haftung, Dichtigkeit und Festigkeit optimierte Folie 1 auf einem durch Kett- und Schußfäden 7, 6 gebildeten Gewebe 3 aufgebracht sind. Aufgrund der Kompression des Gewebes 3 durch ein in Fig. 2 gezeigtes Druckwalzenpaar 4 werden die Kettfäden 7 so zusammengedrückt, daß sie im Querschnitt die Form liegender Ellipsen annehmen. Auch aus der in Fig. 1 nur schematisch dargestellten Anordnung ist gut zu erkennen, daß sich dadurch die Verbindungs"punkte" 2 zwischen Folie bzw. Beschichtung und Gewebe vergrößern.

Fig. 2 zeigt ein Druckwalzenpaar 4, durch das die oben genannte Folie 1 und das in den Fadendichten ausgedünnte Trägergewebe 3 geführt und verbunden werden. Die hierbei geschaffene Verbindung von Folie bzw. Beschichtung und Gewebe kann chemisch, thermisch oder mechanisch erfolgen. Es entsteht hierbei sozusagen eine textilarmierte Kunststofffläche 5, welche durch Einsatz von Bikomponenten-Garnen einen zusätzlichen Verbund erhalten kann. Bei loser Gewebeeinstellung ist auch die Ondulation des Gewebes geringer. Die Bindungspunkte 2 der textilarmierten Kunststofffläche 5 werden beim Walzvorgang durch Druck abgeflacht und bieten für die Folie 1 eine größere Auflage.

Der erfindungsgemäße Gassack kann auch gemäß Anspruch 3 ausgebildet sein. Die zu Anspruch 1 diskutierten Vorteile sind hier zu wiederholen. Durch thermische Behandlung des Gassacks nach dem Webvorgang läßt sich die erforderliche Dichtigkeit und Festigkeit infolge der Vernetzung von Bestandteilen der Ummantelung der kunststoffummantelten Fäden der Gewebelagen erreichen.

## Patentansprüche

1. Gassack mit zwei nicht gasdichten lose gewebten Gewebelagen aus einem textilen Flächengebilde, die zueinander gegenüberliegend angeordnet sind und die wenigstens eine Kammer umschließen, die mit Gas gefüllt werden kann, wobei die Gewebelagen nach außen zeigende Oberflächen aufweisen, **dadurch gekennzeichnet, dass** die beiden Gewebelagen ein Gewebe mit loser Gewebeeinstellung aufweisen, welches die äußere und innere Struktur des Gassacks vorgibt, und dass die nach außen zeigenden Oberflächen jeweils eine Folie mit hoher Festigkeit, Dichtigkeit und Haftfähigkeit aufweisen, die an Verbindungspunkten (2) mit den Gewebelagen chemisch, thermisch oder mechanisch verbunden sind.

2. Gassack nach Anspruch 1, **dadurch gekennzeichnet, daß** die Schichten (1) aus chemisch, thermisch oder mechanisch mit den Oberflächen verbundenen Folien bestehen.

3. Gassack nach Anspruch 1, **dadurch gekennzeichnet, daß** die Schichten (1) aus Bestandteilen von Ummantelungen kunststoffummantelter Fäden der Gewebelagen bestehen.

4. Gassack nach einem der Ansprüche 1 bis 3, **dadurch gekennzeichnet, daß** das textile Flächengebilde Bikomponenten-Garne aufweist.

5. Gassack nach einem der Ansprüche 1 bis 4, **dadurch gekennzeichnet, daß** das textile Flächengebilde ein ausgedünntes Gewebe ist, auf dessen Oberflächen eine Schicht (1) aufgebracht oder eine Folie (1) laminiert ist.

6. Verfahren zum Herstellen eines Gassacks mit wenigstens zwei lose gewebten Gewebelagen, die zueinander gegenüberliegend angeordnet sind und die wenigstens eine Kammer umschließen, die mit Gas gefüllt werden kann, wobei die Gewebelagen nach außen zeigende Oberflächen aufweisen, auf denen Abdichtungs- und/oder Armierungsschichten, Laminate, Folien oder Auflagen angeordnet werden, **gekennzeichnet durch** folgende Schritte:
- Weben des Gassacks auf einer, insbesondere von einer Jacquardeinrichtung gesteuerten, Webmaschine,
- Aufwalzen von thermoplastischen Folien (1) unter Wärme auf die Oberflächen, wobei Bindungpunkte (2) im Gewebe (3) **durch** Druck abgeflacht werden und somit eine größere Auflagefläche für die Folien (1) bieten.

7. Verfahren nach Anspruch 6, **dadurch gekennzeichnet, daß** die Oberflächen und/oder Schichten, Laminate, Folien bzw. Auflagen vor dem Aufwalzen der Folien wenigstens teilweise durch eine Corona-Behandlung oder durch eine Plasmabehandlung oder durch Fluorieren vorbereitet werden.

8. Verfahren nach Anspruch 6 oder 7, **dadurch gekennzeichnet, daß** auf die Oberflächen Folien oder Filme aus Polyamid, Polyesther, Silikon, Neopren oder Polyurethan auflaminiert werden.

9. Verfahren nach Anspruch 6, 7 oder 8, **dadurch gekennzeichnet, daß** die Oberflächen mit einer Silikonschicht versehen werden, die wiederum mit Fluorgas behandelt wird.

## Claims

1. A gas bag comprising two non-gastight loosely woven layers of a textile sheet material arranged facing each other and enclosing at least one chamber which can be charged with gas, the woven layers featuring outwardly facing surfaces, **characterized in that** said two woven layers comprise a fabric with a loose woven set defining the outer and inner structure of the gas bag, and that said outwardly facing surfaces each comprise a film of high mechanical, sealing and bonding strength chemically, thermally or mechanically connected to the woven layers at connecting points (2).

2. The gas bag as set forth in claim 1, **characterized in that** said layers (1) consist of films chemically, thermally or mechanically connected to said surfaces.

3. The gas bag as set forth in claim 1, **characterized in that** said layers (1) consist of components of sheathing of plastics-sheathed threads of said woven layers.

4. The gas bag as set forth in any of the claims 1 to 3, **characterized in that** said textile sheet material comprises bicomponent yarns.

5. The gas bag as set forth in any of the claims 1 to 4, **characterized in that** said textile sheet material is a thinned fabric to the surfaces of which a layer (1) is applied or a film (1) is laminated.

6. A method of producing a gas bag comprising at least two loosely woven layers of a textile sheet material arranged facing each other and enclosing at least one chamber which can be charged with gas, the woven layers featuring outwardly facing surfaces on which sealing and/or strengthening layers, laminates, films or coatings are arranged, **characterized by** the following steps
- weaving the gas bag on a weaving machine, particularly where controlled by a Jacquard device,
- hot rolling said surfaces with thermoplastic films (1) resulting in keying points (2) in the fabric (3) being flattened by pressure to thus offer a larger contact surface area for the films (1).

7. The method as set forth in claim 6, **characterized in that** said surfaces and/or layers, laminates, films or coatings are prepared at least in part by corona or plasma treatment or by fluorination before being rolled with said films.

8. The method as set forth in any of the claims 6 or 7, **characterized in that** films of polyamide, polyester, silicone, neoprene or polyurethane are laminated to said surfaces.

9. The method as set forth in any of the claims 6, 7 or 8, **characterized in that** said surfaces are provided with a layer of silicone which is in turn treated with fluorine gas.

## Revendications

1. Airbag, comportant deux couches de tissu non étanches au gaz et tissées de manière lâche à partir d'un support textile plan, qui sont placées en regard l'une de l'autre et qui enferment au moins une chambre susceptible d'être remplie de gaz, les couches de tissu présentant des surfaces orientées vers l'extérieur, **caractérisé en ce que** les deux couches de tissu présentent un tissu ayant un réglage lâche, qui détermine les structures externe et interne de l'airbag et **en ce que** les surfaces orientées vers l'extérieur présentent chacune une feuille ayant une haute résistance, densité et capacité d'adhérence et sont reliées de manière chimique, thermique ou mécanique aux couches de tissu aux points de liaison (2).

2. Airbag selon la revendication 1, **caractérisé en ce que** les couches (1) consistent en feuilles reliées aux surfaces de manière chimique, thermique ou mécanique.

3. Airbag selon la revendication 1, **caractérisé en ce que** les couches (1) consistent en éléments d'enrobage de fils des couches de tissu enrobés de matière plastique.

4. Airbag selon l'une quelconque des revendications 1 à 3, **caractérisé en ce que** le support textile plan présente des fils à deux composants.

5. Airbag selon l'une quelconque des revendications 1 à 4, **caractérisé en ce que** le support textile plan est un tissu à densité réduite, sur les surfaces duquel une couche (1) est appliquée ou une feuille (1) est laminée.

6. Procédé de production d'un airbag comportant au moins deux couches de tissu qui sont placées en regard l'une de l'autre et qui enferment au moins une chambre susceptible d'être remplie de gaz, les couches de tissu présentant des surfaces orientées vers l'extérieur, sur lesquelles des couches d'étanchéité etlou d'armature, des laminés, des feuilles ou des revêtements sont disposés, **caractérisé par** les étapes suivantes :
- tissage de l'airbag sur une machine à tisser, notamment une machine à tisser commandée par un dispositif Jacquard,
- application par laminage de feuilles thermoplastiques (1) sous chaleur sur les surfaces, les points de liaison (2) dans le tissu (3) étant aplatis par application de pression et offrant ainsi une plus grande surface d'appui pour les feuilles (1).

7. Procédé selon la revendication 6, **caractérisé en ce que** les surfaces et/ou les couches, laminés, feuilles ou revêtements sont préparés avant l'application des feuilles au moins partiellement par un traitement corona ou par un traitement au plasma ou par fluoration.

8. Procédé selon la revendication 6 ou 7, **caractérisé par** l'application sur les surfaces de feuilles ou de films de polyamide, polyester, silicone, néoprène ou polyuréthane par laminage.

9. Procédé selon la revendication 6, 7 ou 8, **caractérisé en ce que** les surfaces sont munies d'une couche de silicone traitée à son tour par du gaz de fluor.
